# FASCICULE DE BREVET EUROPEEN

(11) **EP 2 880 467 B1**
(45) Date de publication et mention de la délivrance du brevet: **03.11.2021**
(21) Numéro de dépôt: 13744535.9
(22) Date de dépôt: 31.07.2013
(51) Int. Cl.: G01V 5/00

(54) **MÉTHODE D'INSPECTION D'UNE CHARGE À L'AIDE D'UN SYSTÈME DE DÉTECTION PAR TRANSMISSION DE RAYONS X**
VERFAHREN ZUR INSPEKTION EINER LAST MITHILFE EINES ERKENNUNGSSYSTEMS MITTELS RÖNTGENSTRAHLENÜBERTRAGUNG
METHOD FOR INSPECTING A LOAD USING A SYSTEM FOR DETECTION BY MEANS OF TRANSMITTING X-RAYS

(30) Priorité: 06.08.2012 FR 1257643
(43) Date de publication de la demande: 10.06.2015
(73) Titulaire: Smiths Heimann SAS, 94400 Vitry Sur Seine (FR)
(72) Inventeur: GADI, Najib, F-77820 Le Chatelet en Brie (FR); DUMAY, Nicolas, F-78720 Dampierre en Yvelines (FR)
(74) Mandataire: Lavoix
(86) Numéro de dépôt international: PCT/EP2013/066122
(87) Numéro de publication internationale: WO 2014/023635

(56) Documents cités:
- WO-A1-2008/009134
- WO-A1-2012/057779
- US-A1- 2005 180 542
- US-B1- 6 317 509
- US-B1- 7 769 132
- None

## Description

La présente invention concerne une méthode d'inspection d'une charge selon la revendication 1.

L'invention concerne aussi un système de détection correspondant, selon la revendication 13.

Pour détecter la présence d'objets suspects tels que des objets de contrebande, des armes ou des engins explosifs dans une charge, il est connu d'utiliser des systèmes de détection pour élaborer une image du contenu de la charge par transmission de rayons X, c'est-à-dire par radiographie. De tels systèmes sont utilisés, par exemple, dans les aéroports, afin de contrôler les bagages des passagers. Ils sont également utilisés dans différents points de contrôle, en particulier par les douanes pour contrôler le contenu de conteneurs ou de remorques de camion.

En général, les systèmes de détection fournissent une image numérisée du contenu de la charge, affichée en niveaux de gris ou en couleurs. La reconnaissance des objets et des matériaux contenus dans la charge est effectuée par un opérateur qui regarde l'image fournie par le système.

Dans des systèmes de détection connus, une source émet des impulsions de rayons X pour éclairer des tranches successives de la charge. Le rayonnement transmis par la charge traverse des capteurs de réception situés dans le prolongement du faisceau incident. Les capteurs de réception mesurent une dose de rayons X reçue. Les signaux transmis par les capteurs de réception sont convertis en valeurs de pixels pour former une colonne de l'image numérisée présentée à l'opérateur.

Dans la source, les rayons X sont en général obtenus par le phénomène dit de *Bremstrahlung,* ou « rayonnement de freinage », par exemple en dirigeant sur une cible métallique un flux d'électrons accélérés à une énergie cinétique donnée, typiquement de quelques MeV. La décélération des électrons dans la cible provoque l'émission de photons X, dont l'énergie est comprise entre 0 et l'énergie cinétique des électrons.

Pour obtenir des informations sur la nature chimiques de matériaux de la charge, c'est-à-dire, par exemple, leur numéro atomique effectif, il est connu de radiographier la charge à différentes énergies de rayons X, par exemple 4 et 6 MeV.

Les matériaux transmettent différemment les rayons X selon leurs énergies et il est possible de déduire de ce comportement différentiel des informations sur la nature chimique des matériaux.

En effet, pour un matériau donné, le signal d'atténuation mesuré est une fonction à la fois de l'épaisseur du matériau, de sa densité et de sa nature chimique (numéro atomique Z) via son coefficient d'atténuation.

Toutefois, l'interprétation des images requiert des calculs assez longs et une calibration parfois délicate à réaliser. Il faut en outre disposer d'un système de détection émettant des rayons X à au moins deux niveaux d'énergie.

Plus récemment sont apparues des méthodes d'inspection plus simples. Ainsi, le document WO-A-2011/017475 divulgue une méthode d'inspection dans laquelle on enregistre des images en transmission. Puis on calcule la variance des résultats de mesure, ou sa dérivée, et on la compare à une ou plusieurs variances prédéterminées, pour en déduire le numéro atomique des matériaux traversés. Cette méthode ne requiert pas, a priori, de calculs très longs. Toutefois, du fait de la relative simplicité des calculs réalisés, la question de la pertinence des résultats, et donc de la détection, se pose. Par ailleurs, une méthode d'inspection d'une charge et d'attribution d'un label aux pixels d'une image est connue de WO2008009134.

Lors de l'inspection de chargements réels tels que les cargaisons transportées par camions, la disposition des objets inspectés, les variations d'épaisseurs de matière traversées par le rayonnement rendent parfois la détermination de numéros atomiques peu précise et peu fiable localement. Les méthodes basées sur la détermination de numéros atomiques peuvent dans certains cas permettre de distinguer deux plaques uniformes de matériaux ayant des numéros atomiques différents (exemple distinguer une plaque acier et une plaque de bois) mais est difficilement exploitable pour sur des charges plus complexes en raison de la disposition et de la superposition d'objets de formes variées.

Un but de l'invention est de fournir une méthode d'inspection à la fois simple et dont la pertinence soit améliorée.

L'invention est destinée à faciliter l'inspection non intrusive de charges réelles et s'appuie sur des éléments caractéristiques des assemblages d'objets de manière globale (caractéristiques images résultantes à la fois de la disposition des objets et de leur interaction avec le rayonnement utilisé pour l'inspection via l'acquisition d'images radioscopiques) et pas sur la détermination de numéros atomiques. L'invention apporte une caractérisation d'un assemblage d'objets, mais ne permet pas d'estimer un numéro atomique, ni de distinguer deux plaques uniformes de matériaux ayant des numéros atomiques différents (exemple une plaque acier et une plaque de bois). L'invention peut être combinée avec une méthode de détermination de numéros atomiques pour bénéficier de la complémentarité des approches.

A cet effet, l'invention a pour objet une méthode d'inspection d'une charge du type précité, dans laquelle l'attribution du label à chaque pixel de chaque zone d'intérêt comprend au moins un test statistique global réalisé à partir de valeurs d'un groupe de pixels de la zone d'intérêt à laquelle appartient le pixel et au moins un test local réalisé à partir de la valeur du pixel.

Par « charge », il faut entendre tout type d'objet que l'on souhaite inspecter, par exemple une valise, un camion, une remorque de camion, ou encore un conteneur, éventuellement placé sur la remorque d'un camion.

Le système de détection peut être de toute nature, par exemple mono-énergie ou bi-énergie. Son rôle est simplement de fournir une image numérisée de la charge à inspecter, l'image comportant au moins une valeur par pixel, représentative de l'intensité des rayons X transmis.

Par « image numérisée », on entend un fichier de données associant à chaque pixel d'un ensemble au moins une valeur représentative de l'intensité des rayons X transmis, ce fichier pouvant être représenté sous la forme d'une image, par exemple sur un écran de poste de contrôle.

Selon des modes particuliers de réalisation, la méthode d'inspection peut comprendre une ou plusieurs des caractéristiques suivantes prise(s) isolément ou selon toutes les combinaisons techniquement possibles :
- on obtient le groupe de pixels de la zone d'intérêt à partir duquel est réalisé le test statistique global en choisissant les pixels de la zone d'intérêt dont la valeur dépasse un seuil prédéterminé ;
- pour l'attribution du label à chaque pixel de chaque zone d'intérêt, on compare la valeur du pixel à un seuil prédéterminé ;
- pour l'attribution du label à chaque pixel de chaque zone d'intérêt, on prend le label parmi un ensemble de labels possibles comprenant un label « indéterminé » indiquant que les matériaux présents dans la partie de la charge correspondant au pixel sont indéterminés ;
- on attribue le label « indéterminé » au pixel de la zone d'intérêt si la taille de la zone d'intérêt est inférieure ou égale à un seuil prédéterminé ; ou si, après un ou plusieurs tests statistiques globaux, la valeur du pixel est supérieure ou égale à un seuil prédéterminé ;
- pour l'attribution du label à chaque pixel de chaque zone d'intérêt, on prend le label parmi un ensemble de labels possibles comprenant : un label « première catégorie » transmettant une information statistique selon laquelle les matériaux présents dans la partie de la charge correspondant au pixel appartiennent à une première catégorie ; et un label « seconde catégorie » transmettant une information statistique selon laquelle les matériaux présents dans la partie de la charge correspondant au pixel appartiennent à une seconde catégorie différente de la première catégorie ; la seconde catégorie comprenant des matériaux de numéros atomiques effectifs plus élevés que ceux de la première catégorie ;
- la première catégorie correspond à des matériaux sensiblement organiques et la seconde catégorie à des matériaux sensiblement inorganiques ;
- le label « première catégorie » est attribué au pixel de la zone d'intérêt si : la taille de la zone d'intérêt est strictement supérieure à un seuil prédéterminé, un ou plusieurs tests statistiques globaux sont satisfaits d'une première manière, et la valeur du pixel est strictement inférieure à un seuil prédéterminé ;
- le label « seconde catégorie » est attribué au pixel de la zone d'intérêt si : la taille de la zone d'intérêt est strictement supérieure à un seuil prédéterminé, un ou plusieurs tests statistiques globaux sont satisfaits d'une seconde manière, différente de la première manière, et la valeur du pixel est strictement inférieure à un seuil prédéterminé ;
- la détermination des zones d'intérêt de l'image numérisée est réalisée à partir d'un calcul d'intensité du gradient de l'image numérisée ;
- la détermination des zones d'intérêt de l'image numérisée comprend une segmentation de type « ligne de partage des eaux » réalisée à partir du calcul d'intensité de gradient de l'image numérisée ;
- l'image numérisée est obtenue à partir de rayons X mono-énergie émis par le système de détection de rayons X ;
- le ou les seuils sont déterminés lors d'une étude portant sur des images radioscopiques de charges réelles comportant notamment de multiples agencements et superpositions d'objets ;
- lorsque, en plus de l'image numérisée, d'autres images radiographiques de la charge sont obtenues, tout ou partie de ces autres images radiographiques sont traitées comme décrit ci-dessus ;
- les informations extraites des images numérisées sont combinées pour vérifier la cohérence des ces informations et produire une information consolidée globale, dérivée des informations issues de traitements appliqués individuellement sur les images
- l'information consolidée est sauvegardée et affichée en complément des différentes informations produites sur la base d'images traitées individuellement ;
- les informations extraites d'une ou de plusieurs images numérisées sont sauvegardées et affichées pour être présentées à un opérateur ;
- la représentation des informations extraites est faite par une colorisation de tout ou partie d'au moins une image radioscopique ou d'une image dérivée d'au moins une image radioscopique ;
- les informations extraites d'une ou de plusieurs images numérisées sont combinées avec des informations de type détermination ou mesures de numéros atomiques obtenues par des méthodes de traitement d'au moins deux images radioscopiques acquises à des énergies différentes ;
- les informations extraites d'une ou de plusieurs images numérisées sont combinées avec des informations de type détermination ou mesures de numéros atomiques obtenues par des méthodes d'inspection neutronique de charges.

L'invention ne nécessite pas de méthode de type tomographique, est applicable individuellement à une ou plusieurs images radioscopiques. Les résultats individuels issus de traitements de différentes images peuvent cependant être combinés pour construire une information consolidée.

L'invention ne s'appuie pas sur l'utilisation de matériaux de référence, contrairement aux méthodes de l'état de la technique qui estiment ou déterminent un numéro atomique donné, et pour lesquelles une phase de réglage préalable se fait habituellement en scannant différentes épaisseurs connues de matériaux de numéros atomiques connus ou en obtenant des informations similaires au travers de modélisation de ce type d'échantillons de matériaux.

L'invention concerne enfin un système d'inspection d'une charge.

L'invention sera mieux comprise à la lecture de la description qui va suivre, donnée uniquement à titre d'exemple et faite en se référant aux dessins annexés sur lesquels :
- la Figure 1 représente une image numérisée d'un camion transportant une charge à inspecter ;
- la Figure 2 représente une image numérisée de la charge, c'est-à-dire une partie de l'image numérisée représentée sur la Figure 1 ;
- la Figure 3 illustre un détail de la Figure 2 ;
- la Figure 4 représente sous forme d'organigramme une méthode d'inspection selon l'invention ;
- la Figure 5 développe, sous forme d'organigramme, l'étape de détermination de zones d'intérêt de la méthode illustrée par la Figure 4 ;
- la Figure 6 développe sous forme d'organigramme l'étape d'attribution d'un label de la méthode illustrée par la Figure 4.

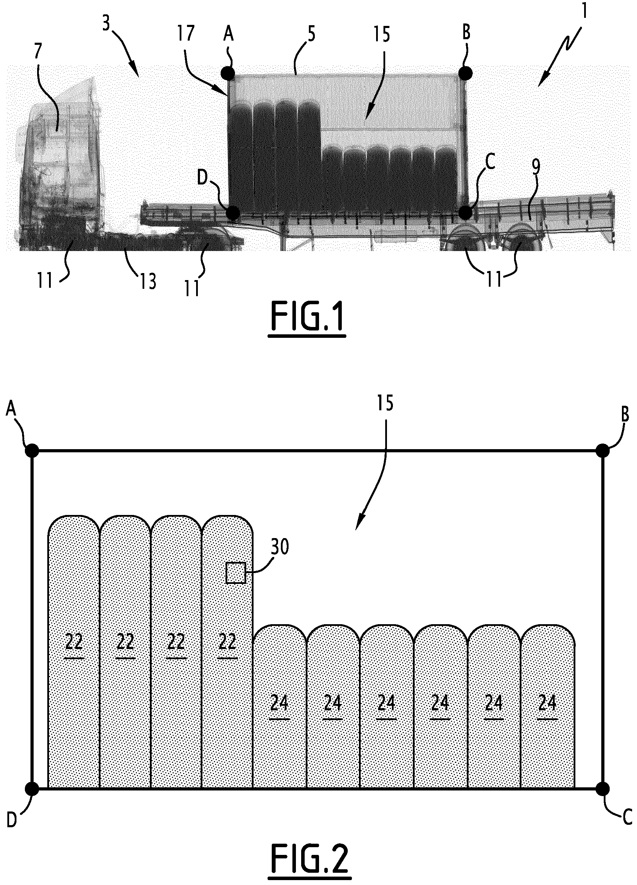

Sur la **Figure 1** est représentée une image numérisée 1 d'un camion 3 transportant un conteneur 5.

Le camion 3 comprend une cabine 7, une remorque 9 supportant le conteneur 5, des roues 11 et un réservoir de carburant 13.

Le conteneur 5 comprend une charge 15 à inspecter.

L'image numérisée 1 a été obtenue d'une manière qui sera décrite plus tard, à l'aide d'un système de détection par transmission de rayons X, par exemple un scanner mobile HCVM commercialisé par la société Smiths Détection.

L'image numérisée 1 délivrée par le système de détection est en niveau de gris.

Le camion 3 et le conteneur 5 sont vus de côté. Les parties sombres de l'image numérisée 1 correspondent à des zones du camion 3 ayant peu transmis les rayons X émis par le système de détection, comme la remorque 9, les roues 11 et certaines parties du conteneur 5, tandis que les parties claires de l'image numérisée 1 correspondent à des zones plus transparentes aux rayons X, comme la cabine 7.

En vue de côté, le conteneur 5 comprend une enveloppe 17 et s'étend entre quatre coins A, B, C, D, les points C et D étant situés à la base du conteneur 5, les points A et D se situant du côté de la cabine 7.

La **Figure 2** représente une image numérisée 20 de la charge 15, c'est-à-dire une partie de l'image numérisée 1 du camion 3.

Dans l'exemple, le conteneur 5 contient de grands récipients 22 et de petits récipients 24 contenant par exemple de l'huile.

Les récipients 22, 24 situés à l'intérieur du conteneur sont constitués de matériaux, possédant des numéros atomiques effectifs Z.

Le numéro atomique effectif Z d'un matériau peut être défini comme une moyenne spatiale des numéros atomiques des éléments constituant le matériau. On peut donc définir une fonction « numéro atomique effectif» associant à un point de la charge 15 un numéro atomique effectif défini comme la moyenne des numéros atomiques des éléments compris dans voisinage du point de la charge 15.

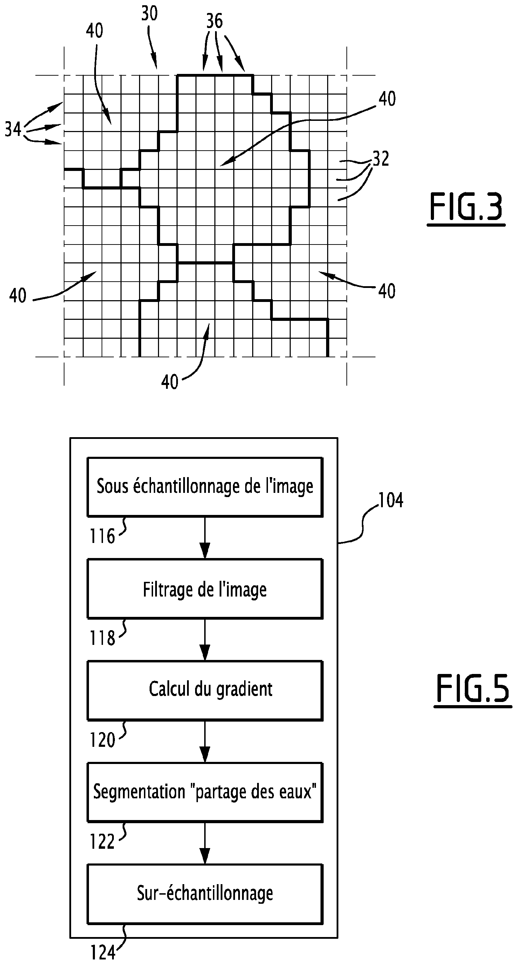

La **Figure 3** est un agrandissement d'une partie 30 de l'image numérisée 20 de la charge 15, située au niveau d'un des grands récipients 22.

Comme on le voit sur cet agrandissement, l'image numérisée 20 de la charge 15 comprend des pixels 32. Dans l'exemple, l'image numérisée 1 du camion 3 comprend au moins 100 x 100 pixels, soit au moins 10000 pixels 32 au total. Avantageusement l'image numérisée 1 comprend plusieurs millions de pixels 32.

Les pixels 32 sont des éléments individuels des images numérisées 1 et 20. Dans l'exemple, les pixels 32 ont la forme de carrés identiques, avantageusement organisés en lignes horizontales 34 et en colonnes verticales 36.

A chaque pixel 32 de l'image numérisée 20 de la charge 15 est associée une valeur, fournissant dans l'exemple le niveau de gris de l'image numérisée 20. La valeur est comprise entre Vₘᵢₙ et Vₘₐₓ.

Chaque valeur de pixel est avantageusement codée en système binaire sur 16 bits, c'est-à-dire que la valeur de pixel peut prendre des valeurs entières entre Vₘᵢₙ = 0 et Vₘₐₓ = 65535.

La partie 30 représentée sur Figure 3 est un carré comprenant 15 x 15 pixels.

On distingue aussi, sur la Figure 3, des zones d'intérêts 40 de l'image numérisée 20 de la charge 15, qui sont des sous-ensembles de pixels 32 de l'image numérisée 20 de la charge 15. Une manière d'obtenir les zones d'intérêts 40 sera décrite plus tard.

Dans l'exemple, les zones d'intérêt 40 sont jointives et la réunion de toutes les zones d'intérêt 40 reconstitue la charge 15 à inspecter, c'est-à-dire ici le contenu du conteneur 5. En d'autres termes, les zones d'intérêt 40 forment un pavage de l'image numérisée 20 de la charge 15.

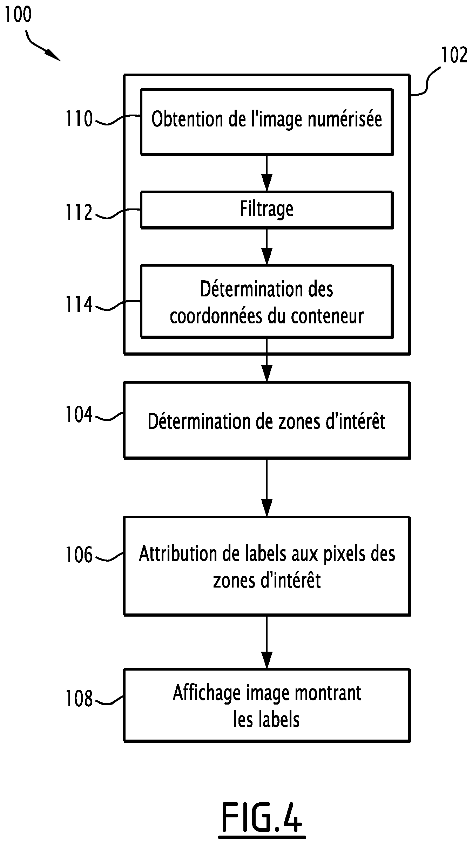

On va maintenant décrire une méthode d'inspection 100 selon l'invention, mise en oeuvre à l'aide d'un calculateur, en référence à l'organigramme de la **Figure 4****.**

La méthode 100 comprend une étape 102 d'obtention de l'image numérisée 20 de la charge 15 à inspecter, une étape 104 de détermination des zones d'intérêts 40, une étape 106 d'attribution d'un label L à chacun des pixels 32 des zones d'intérêt 40 et une étape 108 d'affichage d'une image montrant les labels L attribués aux pixels 32.

L'étape 102 d'obtention de l'image numérisée 20 de la charge 15 comprend elle-même plusieurs sous-étapes successives 110, 112, 114 décrites ci-après.

Dans la sous-étape 110, on produit une image numérisée 1 du camion 3 et du conteneur 5 selon une méthode connue en soi.

On fait passer le camion 3 et son conteneur 5 dans un système de détection (non représenté), par exemple un scanner mobile.

Le système de détection comprend une source fixe de rayons X, apte à produire des impulsions de rayons X sous la forme d'un faisceau divergent s'étendant dans un plan donné, et un portique de détection, pourvu de capteurs de rayons X situés le long d'une première ligne verticale et d'une seconde ligne horizontale situées toutes deux dans le plan du faisceau de rayons X émis par la source.

Dans l'exemple, les impulsions de rayons X utilisées pour obtenir l'image numérisée du camion sont mono-énergie, c'est-à-dire que les électrons sont accélérés par une même tension de consigne, par exemple 4 MV, de sorte que les impulsions de rayons X présentent un spectre d'énergie sensiblement constant dans le temps, allant de 0 à 4 MeV. D'éventuelles fluctuations d'énergie peuvent se produire, qui sont dues à des instabilités de la source et non à un changement de la tension de consigne.

On fait passer le camion 3 sous le portique de détection, entre la source de rayons X et les capteurs de rayons X. Chaque impulsion de rayons X traverse une tranche de la charge sensiblement orthogonale à la trajectoire du camion 3. Les capteurs enregistrent chacun une dose reçue. Une colonne de l'image numérisée 3 est ensuite générée dans un calculateur à partir des doses enregistrées.

La répétition de cette opération sur des tranches successives du camion 3 permet de générer l'image numérisée 1 du camion 3, représentée sur la Figure 1.

En variante, l'image numérisée 1 est obtenue à l'aide d'un système situé à distance du calculateur, l'image numérisée 1 étant transmise au calculateur, par exemple par un réseau filaire ou par ondes électromagnétiques.

Dans la sous-étape 112, on filtre l'image numérisée 1, de manière à réduire le bruit éventuel présent dans l'image numérisée 1, selon un procédé connu en soi, par exemple en utilisant un seuillage suivi d'une fermeture morphologique.

Dans la sous-étape 114, on détermine la zone de l'image numérisée correspondant au conteneur 5, par exemple en déterminant les coordonnées des coins A, B, C, D par des techniques connues en elles-mêmes. En effet, comme le conteneur se présente sur l'image numérisée 1 sous forme de rectangle, il peut être facilement détecté sur l'image filtrée (après l'étape de filtrage 112) en utilisant des opérations géométriques dites de « chaînage ».

A l'issue de l'étape 102, on a obtenu l'image numérisée 20 de la charge 15 à inspecter.

On comprend que chaque pixel 32 de l'image numérisée 20 de la charge 15 correspond à une partie de la charge 15, en ce sens que la valeur associée à ce pixel 32 est représentative de l'intensité des rayons X ayant traversé cette partie de la charge 15. La valeur associée à ce pixel 32 dépend du gabarit et de la nature des matériaux présents dans cette partie de la charge 15.

La valeur Vₘᵢₙ (dans l'exemple 0) pour un pixel 32 signifie une absorption complète des rayons X par la partie de la charge 15 correspondant au pixel 32, tandis que la valeur Vₘₐₓ pour un pixel 32 (dans l'exemple 65535) signifie une transmission complète des rayons X par la partie de la charge 15 correspondant au pixel 32.

Selon un mode de réalisation particulier de la méthode d'inspection 100, l'image numérisée 20 n'est pas affichée.

Dans l'étape 104 de détermination des zones d'intérêts 40, on segmente l'image numérisée 20 de la charge 15, c'est-à-dire la zone ABCD de l'image numérisée 1, pour obtenir les zones d'intérêts 40, dont cinq sont schématiquement représentées sur la Figure 3.

L'étape 104 de détermination des zones d'intérêts 40 comprend elle-même plusieurs sous-étapes successives 116, 118, 120, 122, 124 décrites ci-après, en référence à l'organigramme de la Figure 5.

Dans la sous-étape 116, on sous-échantillonne la zone ABCD de l'image numérisée de manière à réduire le volume de données à traiter ultérieurement.

Par exemple, on ne conserve qu'un seul pixel sur quatre pixels jointifs formant un carré, et on lui donne une valeur définie comme la moyenne des quatre valeurs des pixels du carré. Le volume de données est alors réduit d'un facteur quatre, avec un impact favorable sur les temps de calcul des étapes ultérieures.

Dans la sous-étape 118, on filtre l'image sous-échantillonnée obtenue à l'issue de l'étape 116 selon une méthode connue en soi. Ceci a pour but d'obtenir ultérieurement une « bonne » image gradient à l'étape 120 décrite ci-dessous et d'éviter le phénomène de sur-segmentation à la fin de l'étape 124. On emploie, par exemple, une méthode de lissage par diffusion anisotropique. Celle-ci consiste à supprimer les perturbations locales du signal par homogénisation maximale effectuée loin des contours.

Dans la sous-étape 120, on calcule l'intensité du gradient de l'image numérisée 20 de la charge 15 selon une méthode connue en soi, pour déterminer les contours de l'image numérisée 20 de la charge 15.

Par exemple, on organise l'image numérisée 20 de la charge 15 sous forme d'une matrice, chaque pixel 32 de l'image numérisée 20 de la charge 15 correspondant à un terme de la matrice et les valeurs des termes de la matrice étant les valeurs associées aux pixels 32. Puis on exécute la convolution de cette matrice avec, par exemple, une matrice de Sobel.

Cette convolution revient à calculer, pour chaque pixel 32, une dérivée locale à partir de la valeur du pixel 32 et des valeurs des pixels voisins du pixel 32 considéré. Le résultat de la convolution est une matrice dont les termes fournissent une image gradient, représentative de l'intensité du gradient de l'image numérisée 20 de la charge 15.

Si l'on affiche l'image gradient, on constate qu'elle souligne des contours d'objets présents dans l'image numérisée 20 de la charge 15.

Dans la sous-étape 122, on réalise une segmentation de l'ensemble des pixels 32 selon une technique dite « ligne de partage des eaux », connue en soi. Une telle technique revient à représenter l'image gradient en trois dimensions, les deux premières dimensions étant les coordonnées des pixels 32 et la troisième coordonnée étant l'intensité du gradient, assimilée à une altitude. L'image gradient ainsi représentée forme un paysage imaginaire, comportant des « crêtes » correspondant aux contours de l'image numérisée de la charge, ces « crêtes » étant séparées par des « vallées ».

Ensuite, on détermine des zones de « partage des eaux » dans ce paysage imaginaire, selon une méthode connue en soi. Les pixels 32 d'une même zone de « partage des eaux » définissent une des zones d'intérêt 40 cherchées.

Dans la sous-étape 124, on effectue un sur-échantillonnage de l'image issue de la sous-étape 122 de la charge 15 et des zones d'intérêt, selon une méthode connue en soi.

Par exemple, pour chaque pixel 32 de l'image sous-échantillonnée, on réintègre les trois pixels qui ont été « éliminés » lors de la sous-étape 116 de sous-échantillonnage et on les affecte à la zone d'intérêt 40 à laquelle appartient le pixel 32 considéré. On revient ainsi au nombre de pixels 32 initial.

A l'issue de l'étape 104, on a déterminé les zones d'intérêt 40 de l'image numérisée 20 de la charge 15.

L'étape 106 d'attribution d'un label L à chacun des pixels 32 des zones d'intérêt 40 déterminées à l'étape 104 comprend, d'une part, au moins un test statistique global réalisé à partir de valeurs d'un groupe de pixels de la zone d'intérêt 40 à laquelle appartient le pixel 32 et, d'autre part, au moins un test local réalisé à partir de la valeur du pixel 32.

Le label L attribué est pris parmi un ensemble de labels possibles, comportant au moins deux labels possibles, de manière à fournir une information qui distingue les pixels de l'image numérisée 20 entre eux.

Dans l'exemple, l'ensemble de labels possibles comprend un label « indéterminé ». Le label « indéterminé » indique que les matériaux présents dans la partie de la charge 15 correspondant au pixel 32 sont indéterminés. Plus exactement, l'attribution d'un autre label possible aux matériaux présents dans cette partie de la charge 15 présenterait une probabilité d'erreur importante.

L'ensemble des labels possibles comprend en outre un label « première catégorie » et un label « seconde catégorie ».

Le label « première catégorie » transmet une information statistique selon laquelle les matériaux présents dans la partie de la charge correspondant au pixel appartiennent à une première catégorie, comprenant par exemple les matériaux dont le numéro atomique effectif est inférieur ou égal à une limite supérieure, par exemple comprise entre 18 et 20, avantageusement 19. Les matériaux sont généralement organisés dans l'espace d'une manière qui, au travers des interactions matière-rayonnement, conduit lors de l'utilisation de l'invention à l'obtention probable d'un label caractéristique de cette classe de matériaux.

Les matériaux de la première catégorie sont dits « sensiblement organiques ».

Le label « seconde catégorie » transmet également une information statistique selon laquelle les matériaux présents dans la partie de la charge correspondant au pixel appartiennent à une seconde catégorie, comprenant par exemple les matériaux dont le numéro atomique effectif est strictement supérieur à ladite limite (par exemple comprise entre 18 et 20, avantageusement 19). Les matériaux étant généralement organisés dans l'espace d'une manière qui, au travers des interactions matière-rayonnement, conduit lors de l'utilisation de l'invention à l'obtention probable d'un label caractéristique de cette classe de matériaux.

Les matériaux de la seconde catégorie sont dits « sensiblement inorganiques ».

La seconde catégorie comprend donc des matériaux de numéros atomiques effectifs plus élevés que ceux de la première catégorie. La partie de la charge 15 correspondant à un pixel 32 auquel a été attribué le label « seconde catégorie » comprend des matériaux de numéros atomiques effectifs statistiquement plus élevés que ceux des matériaux compris dans une partie de la charge correspondant à un pixel 32 auquel a été attribué le label « première catégorie ».

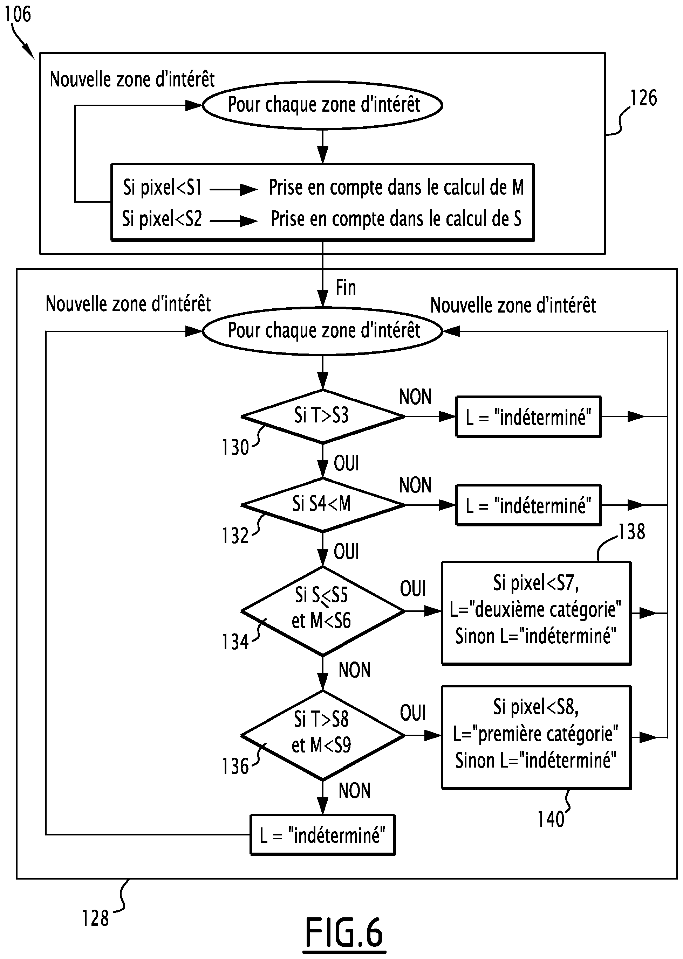

Une manière d'attribuer un label L à chaque pixel 32 de chaque zone d'intérêt 40 maintenant être décrite en référence à l'organigramme de la **Figure 6****,** qui décompose l'étape 106 d'attribution d'un label L en deux sous-étapes 126, 128 successives.

Dans la sous-étape 126, pour chaque zone d'intérêt 40, on prépare la réalisation de tests statistiques globaux à partir de valeurs d'un groupe de pixels 32 de la zone d'intérêt 40 considérée.

Les tests sont dits « globaux » quand ils concernent un grand nombre de pixels 32, avantageusement supérieur ou égal à 10, par opposition aux tests dits « locaux » qui ne concernent que quelques pixels 32, typiquement moins de 10 pixels 32, avantageusement un seul pixel 32.

Parmi les tests statistiques globaux à réaliser, certains concernent une moyenne globale M calculée à partir de valeurs d'un groupe de pixels 32 de la zone d'intérêt 40 considérée. D'autres concernent un écart-type global S calculé partir de valeurs d'un groupe de pixels 32 de la zone d'intérêt 40 considérée.

Le groupe de pixels 32 peut dépendre du test statistique global considéré (M ou S dans l'exemple) et est déterminé, dans l'exemple, en choisissant les pixels 32 de la zone d'intérêt 40 considérée dont la valeur dépasse un seuil prédéterminé.

Pour le calcul de la moyenne globale M, on retient dans le groupe de pixels les pixels 32 de la zone d'intérêt 40 dont la valeur est strictement inférieure à un premier seuil prédéterminé S1 et on calcule M comme étant la moyenne arithmétique des valeurs des pixels 32 du groupe de pixels retenus. Dans l'exemple, S1 vaut 20000, c'est-à-dire que le calcul de la moyenne globale M porte sur les pixels 32 dont la valeur est strictement inférieure à 20000, donc sur des pixels 32 relativement « foncés ».

Pour le calcul de la l'écart-type global S, on retient dans le groupe de pixels les pixels 32 de la zone d'intérêt 40 dont la valeur est strictement inférieure à un second seuil prédéterminé S2 et on calcule S comme étant l'écart-type des valeurs des pixels 32 du groupe de pixels retenus. Dans l'exemple, S2 vaut également 20000, c'est-à-dire que le calcul de la l'écart-type global S porte aussi sur les pixels 32 dont la valeur est strictement inférieure à 20000.

Selon une variante de la méthode d'inspection, le seuil S2 peut être différent du seuil S1.

Selon un mode particulier de réalisation, les seuils prédéterminés S1 et S2 valent 1/3 de la valeur maximale possible pour les pixels (ici 65535), à plus ou moins 10%.

Par « à plus ou moins 10% », on entend que le seuil concerné est compris dans un intervalle fermé allant de 90% à 110% du niveau indiqué.

S'il n'est pas possible de calculer la moyenne globale M ou l'écart-type global S de la zone d'intérêt parce que le groupe de pixels est vide (cas où les pixels 32 de la zone d'intérêt 40 ont tous une valeur supérieure à S1 ou à S2), on attribue le label « indéterminé » à tous les pixels 32 de la zone d'intérêt concernée.

A l'issue de la sous-étape 126, pour toutes les zones d'intérêt 40 de l'image numérisée 20 de la charge 15, on dispose de la moyenne globale M et de l'écart-type global S de la zone d'intérêt 40, ou bien les pixels 32 de la zone d'intérêt 40 ont reçu le label « indéterminé ».

Dans la sous-étape 128, pour chaque zone d'intérêt 40 dont les pixels n'auraient pas reçu le label « indéterminé » à l'issue de la sous-étape 126, on effectue une série de tests globaux 130, 132, 134, 136 et de tests locaux 138, 140 décrits ci-après.

Tout d'abord, pour le test 130, on calcule une taille T de la zone d'intérêt 40 considérée, avantageusement définie comme le nombre de pixels 32 contenus dans la zone d'intérêt 40 considérée.

On compare la taille T de la zone d'intérêt 40 considérée à un troisième seuil prédéterminé S3 :
- si la taille T de la zone d'intérêt 40 considérée est inférieure ou égale à S3, on attribue à tous les pixels 32 de la zone d'intérêt considérée le label « indéterminé », et on passe à la zone d'intérêt 40 suivante,
- sinon, on poursuit par le test 132 sur la zone d'intérêt 40 considérée.

Par exemple, S3 vaut 10000 pixels. Ceci définit une surface minimale des objets qu'on souhaite « discriminer ». Dans l'exemple, la valeur de 10000 pixels définit une surface de 100 x 100 pixels, soit environ 40 cm par 40 cm.

Dans le test 132, on compare la moyenne globale M de la zone d'intérêt 40 considérée à un quatrième seuil prédéterminé S4 :
- si la moyenne globale M est inférieure ou égale à S4, on attribue à tous les pixels 32 de la zone d'intérêt considérée le label « indéterminé », et on passe à la zone d'intérêt 40 suivante,
- sinon, on poursuit par le test 134 sur la zone d'intérêt 40 considérée.

Dans le test 134, on compare la moyenne globale M de la zone d'intérêt 40 considérée à un cinquième seuil prédéterminé S5 et on compare l'écart-type global S de la zone d'intérêt 40 considérée à un sixième seuil prédéterminé S6.

Si la moyenne globale M est inférieure ou égale à S5 et l'écart-type global S est strictement inférieur à S6, alors on attribue le label « seconde catégorie » à tous les pixels 32 de la zone d'intérêt 40 considérée dont la valeur est strictement inférieure à un septième seuil prédéterminé S7 (test local 138 réalisé sur chaque pixel 32 de la zone d'intérêt 40 considérée). On attribue le label « indéterminé » à tous les pixels 32 de la zone d'intérêt 40 considérée dont la valeur est supérieure ou égale à S7 (test local 138 réalisé sur chaque pixel 32 de la zone d'intérêt 40 considérée), et on passe à la zone d'intérêt 40 suivante.

Sinon, on poursuit par le test 136 sur la zone d'intérêt 40 considérée.

Selon un mode de réalisation particulier, S5 vaut 1/20 de la valeur maximale possible pour les pixels 32, à plus ou moins 10% ; S6 vaut 1/30 de la valeur maximale possible pour les pixels 32, à plus ou moins 10% ; et S7 vaut 2/3 de la valeur maximale possible pour les pixels 32, à plus ou moins 10%.

Dans le test 136, on compare la taille T de la zone d'intérêt 40 considérée à un huitième seuil prédéterminé S8 et on compare l'écart-type global S de la zone d'intérêt 40 considérée à un neuvième seuil prédéterminé S9.

Si la taille T est strictement supérieure à S8 et l'écart-type global S est strictement inférieur à S9, alors on attribue le label « première catégorie » à tous les pixels 32 de la zone d'intérêt 40 considérée dont la valeur est strictement inférieure à un dixième seuil prédéterminé S10 (test local 139 réalisé sur chaque pixel 32 de la zone d'intérêt 40 considérée) et on attribue le label « indéterminé » à tous les pixels 32 de la zone d'intérêt 40 considérée dont la valeur est supérieure ou égale à S10 (test local 139 réalisé sur chaque pixel 32 de la zone d'intérêt 40 considérée), et on passe à la zone d'intérêt 40 suivante.

Sinon, on attribue à tous les pixels 32 de la zone d'intérêt 40 considérée le label « indéterminé », et on passe à la zone d'intérêt 40 suivante.

Selon un mode de réalisation particulier, S8 vaut 70% de la valeur maximale possible pour les pixels 32, à plus ou moins 10% ; S9 vaut 9% de la valeur maximale possible pour les pixels 32, à plus ou moins 10% ; et S10 vaut 2/3 de la valeur maximale possible pour les pixels 32, à plus ou moins 10%.

On passe à la zone d'intérêt 40 suivante jusqu'à ce que toutes les zones d'intérêt 40 de l'image 20 aient été traitées par l'attribution d'un label L à chacun de leurs pixels 32.

A l'issue de la sous-étape 128, c'est-à-dire aussi de l'étape 106, tous les pixels 32 de toutes les zones d'intérêt 40 de l'image numérisée 20 de la charge 15 ont donc avantageusement reçu un label L.

L'étape 108 d'affichage d'une image montrant les labels L attribués aux pixels 32 consiste à afficher les labels L attribués aux pixels 32 correspondant à la charge 15 à inspecter.

Ceci peut avantageusement être fait en attribuant une couleur particulière à chacun des labels possibles.

Avantageusement, les pixels 32 de l'image numérisée 1 du camion 3 n'appartenant pas à la zone ABCD correspondant à la charge 15 à inspecter peuvent être laissés inchangés et affichés en niveaux de gris dans l'image montrant les labels L attribués.

Selon une variante, on peut détecter l'enveloppe 17 du conteneur 5, les roues 11 et le réservoir 13 du camion et leur attribuer des labels particuliers. On peut ensuite associer des couleurs particulières aux labels particuliers et afficher les pixels 32 de l'enveloppe 17 du conteneur 5, des roues 11 et du réservoir 13 du camion 3 dans ces couleurs particulières.

Selon une autre variante, les étapes 104 de détermination des zones d'intérêt 40 et 106 d'attribution de labels L aux pixels 32 peuvent être appliquées à d'autres parties de l'image numérisée 1 que le conteneur 5. Par exemple, elles peuvent être appliquées aux roues 11 et/ou au réservoir 13.

L'image montrant les labels L attribués est ensuite, en général, visionnée par un opérateur qui l'interprète pour détecter des objets, tels que des matières dangereuses ou prohibées, dans la charge 15 à inspecter.

On constate que, grâce au fait que l'attribution du label L à chaque pixel 32 de chaque zone d'intérêt 40 comprend au moins un test statistique global 132, 134, 136 réalisé à partir de valeurs d'un groupe de pixels de la zone d'intérêt 40 à laquelle appartient le pixel 32 et au moins un test local 138, 140 réalisé à partir la valeur du pixel 32, la méthode d'inspection 100 reste simple, tout en bénéficiant d'une pertinence améliorée.

Cette méthode permet en particulier d'obtenir de manière fiable des informations sur la nature chimique des différentes parties de la charge 15, même si l'image numérisée 1 est « mono-énergie ».

Les seuils S1 à S9 peuvent être déterminés ou ajustés par une méthode empirique. Par exemple, on peut appliquer la méthode de détection sur une pluralité de charges 15 test en utilisant des valeurs données pour les seuils. Puis on peut faire varier les valeurs de seuils et mesurer à chaque fois la pertinence de la méthode (pourcentage d'erreur sur les charges test).

On constate en outre que les meilleurs candidats pour réaliser le test global sont la moyenne globale M, l'écart-type global S, la variance, les moments d'ordre supérieurs à la variance, ou leurs combinaisons, calculés sur lesdites valeurs du groupe de pixels de la zone d'intérêt 40, de préférence la moyenne globale M et l'écart-type global S.

La prise en compte de la taille T des zones d'intérêt 40 a par ailleurs un impact positif sur la pertinence de la méthode de détection 100.

Le test local présent dans la sous-étape 126 et dans les tests 138, 140 consistant à comparer la valeur du pixel 32 à un seuil prédéterminé a également démontré un impact favorable sur la pertinence des labels L attribués.

D'une manière générale, la possibilité d'attribuer le label « indéterminé », indiquant que les matériaux présents dans la partie de la charge 15 correspondant au pixel 32 sont indéterminés, réduit les risques d'attribution d'un label L erroné. En d'autres termes, cette possibilité augmente la pertinence de la méthode 100.

Les cas où le label « indéterminé » peut être attribué sont bien détectés grâce à la prise en compte, notamment, de la taille T de la zone d'intérêt 40 où se trouve le pixel 32 considéré et par la prise en compte de la valeur du pixel 32 considéré.

La méthode de détection 100 a démontré une pertinence dans l'attribution des labels « première catégorie » et « seconde catégorie », notamment quand ces deux catégories discriminent entre les matériaux « sensiblement organiques » et les matériaux « sensiblement inorganiques », au sens définis ci-dessus.

Un avantage de la méthode de détection 100 selon l'invention est qu'elle peut être mise en oeuvre en utilisant des images numérisées 1 obtenues par des impulsions de rayons X mono-énergie. Ceci réduit le temps éventuel d'acquisition de l'image numérisée (1) et offre une fonctionnalité améliorée aux systèmes de détection fonctionnant exclusivement à une seule énergie.

En variante, d'autres systèmes de détection peuvent être utilisés, par exemple des systèmes mettant en oeuvre plusieurs niveaux d'énergie, tels que ceux utilisés classiquement pour déterminer la nature chimique des matériaux traversés, en particulier les systèmes incorporant au moins une méthode de détermination des numéros atomiques des objets inspectés. L'invention permettra alors l'obtention d'informations complémentaires pouvant être ou non combinées avec les numéros atomiques déterminés pour enrichir ou affiner la caractérisation de la charge inspectée.

Selon une autre variante, on peut utiliser pour la méthode de détection 100 une image numérisée 1 du camion 3 obtenue à partir d'impulsions de rayons X d'énergie différentes.

La méthode d'inspection 100 décrite ci-dessus présente l'avantage de s'adapter à tout système de détection par transmission de rayons X capable de générer au moins une image numérisée de la charge 15 à inspecter. Par exemple l'invention pourra être utilisée sur des systèmes disposant de deux vues radioscopiques.

L'invention est avantageusement mise en oeuvre par un programme d'ordinateur comprenant une ou plusieurs séquences d'instructions accessibles à un processeur et qui, lorsqu'elles sont exécutées par le processeur, lui font mettre en oeuvre l'étape 104 de détermination des zones d'intérêt 40 de l'image numérisée 20 de la charge 15 à inspecter, et l'étape 106 d'attribution d'un label L à chaque pixel 32 de chaque zone d'intérêt 40.

## Revendications

1. Méthode d'inspection (100) d'une charge (15) comprenant les étapes suivantes :
- obtention (102) d'au moins une image numérisée (20) de la charge (15) générée à l'aide d'un système de détection par transmission de rayons X à travers la charge (15), l'image numérisée (20) comprenant un ensemble de pixels (32), une valeur représentative de la transmission des rayons X étant associée à chaque pixel (32), chaque pixel étant associé à une partie de la charge (15) ;
- détermination (104) de zones d'intérêt (40) de l'image numérisée (20) à partir des valeurs des pixels (32), les zones d'intérêt (40) étant des sous-ensembles de l'image numérisée (20) ;
- attribution (106) d'un label (L) à chaque pixel (32) de chaque zone d'intérêt (40), le label (L) attribué au pixel (32) étant représentatif de la nature chimique et de la disposition des matériaux constituant la partie de la charge (15) correspondant au pixel (32) ; et
- affichage d'une image montrant les labels (L) attribués aux pixels (32) ; **caractérisée en ce que** :
- l'attribution (106) du label (L) à chaque pixel (32) de chaque zone d'intérêt (40) comprend au moins un test statistique global (132, 134, 136) réalisé à partir de valeurs d'un groupe de pixels de la zone d'intérêt (40) à laquelle appartient le pixel (32) et au moins un test local (138, 139, 126) réalisé à partir de la valeur du pixel (32),
- pour réaliser le test statistique global (132, 134, 136), on compare à au moins un seuil prédéterminé (S4, S5, S6, S9) une grandeur (M, S) choisie parmi la moyenne, l'écart-type, les moments d'ordre supérieurs, et/ou leurs combinaisons, calculés sur lesdites valeurs du groupe de pixels de la zone d'intérêt (40), et
- pour l'attribution (106) du label (L) à chaque pixel (32) de chaque zone d'intérêt (40), on calcule une taille (T) de la zone d'intérêt (40), définie comme le nombre de pixels (32) de la zone d'intérêt (40).

2. Méthode d'inspection (100) selon la revendication 1, **caractérisée en ce qu'**on obtient le groupe de pixels de la zone d'intérêt (40) à partir duquel est réalisé le test statistique global (132, 134, 136) en choisissant les pixels (32) de la zone d'intérêt (40) dont la valeur dépasse un seuil prédéterminé (S1, S2).

3. Méthode d'inspection (100) selon l'une quelconque des revendications 1 ou 2, **caractérisée en ce que**, pour l'attribution du label (L) à chaque pixel (32) de chaque zone d'intérêt (40), on compare la valeur du pixel (32) à un seuil prédéterminé (S1, S2, S7, S8).

4. Méthode d'inspection (100) selon l'une quelconque des revendications 1 à 3, **caractérisée en ce que**, pour l'attribution (106) du label (L) à chaque pixel (32) de chaque zone d'intérêt (40), on prend le label (L) parmi un ensemble de labels possibles comprenant un label « indéterminé » indiquant que les matériaux présents dans la partie de la charge (15) correspondant au pixel (32) sont indéterminés.

5. Méthode d'inspection (100) selon la revendication 4, dans sa dépendance avec les revendications 2 à 5, **caractérisée en ce qu'**on attribue le label « indéterminé » au pixel (32) de la zone d'intérêt (40) si :
- la taille (T) de la zone d'intérêt (40) est inférieure ou égale à un seuil prédéterminé (S3) ; ou
- après un ou plusieurs tests statistiques globaux (132, 134, 136), la valeur du pixel (32) est supérieure ou égale à un seuil prédéterminé (S7, S8).

6. Méthode d'inspection (100) selon l'une quelconque des revendications 1 à 5, **caractérisée en ce que**, pour l'attribution (106) du label (L) à chaque pixel (32) de chaque zone d'intérêt (40), on prend le label (L) parmi un ensemble de labels possibles comprenant :
- un label « première catégorie » transmettant une information statistique selon laquelle les matériaux présents dans la partie de la charge (15) correspondant au pixel (32) appartiennent à une première catégorie ; et
- un label « seconde catégorie » transmettant une information statistique selon laquelle les matériaux présents dans la partie de la charge (15) correspondant au pixel (32) appartiennent à une seconde catégorie différente de la première catégorie ;
la seconde catégorie comprenant des matériaux de numéros atomiques effectifs plus élevés que ceux de la première catégorie.

7. Méthode d'inspection (100) selon la revendication 6, **caractérisée en ce que** la première catégorie correspond à des matériaux sensiblement organiques et la seconde catégorie à des matériaux sensiblement inorganiques.

8. Méthode d'inspection (100) selon la revendication 6 ou 7, dans sa dépendance avec les revendications 2 à 5, **caractérisée en ce que** le label « première catégorie » est attribué au pixel (32) de la zone d'intérêt (40) si :
- la taille (T) de la zone d'intérêt (40) est strictement supérieure à un seuil prédéterminé (S3),
- un ou plusieurs tests statistiques globaux (132, 134, 136) sont satisfaits d'une première manière, et
- la valeur du pixel (32) est strictement inférieure à un seuil prédéterminé (S8).

9. Méthode d'inspection selon la revendication 8, **caractérisée en ce que** le label « seconde catégorie » est attribué au pixel de la zone d'intérêt si :
- la taille (T) de la zone d'intérêt (40) est strictement supérieure à un seuil prédéterminé (S3),
- un ou plusieurs tests statistiques globaux (132, 134) sont satisfaits d'une seconde manière, différente de la première manière, et
- la valeur du pixel (32) est strictement inférieure à un seuil prédéterminé (S7).

10. Méthode d'inspection (100) selon l'une quelconque des revendications 1 à 9, **caractérisée en ce que** la détermination des zones d'intérêt (40) de l'image numérisée (20) est réalisée à partir d'un calcul d'intensité du gradient de l'image numérisée (20).

11. Méthode d'inspection (100) selon la revendication 10, **caractérisée en ce que** la détermination des zones d'intérêt (40) de l'image numérisée (20) comprend une segmentation de type « ligne de partage des eaux » réalisée à partir du calcul d'intensité de gradient de l'image numérisée (20).

12. Méthode d'inspection (100) selon l'une quelconque des revendications 1 à 11, **caractérisée en ce que** l'image numérisée (20) est obtenue à partir de rayons X mono-énergie émis par le système de détection de rayons X.

13. Système d'inspection d'une charge (15) comprenant :
- des moyens d'obtention d'une image numérisée (20) de la charge (15) générée à l'aide d'un système de détection par transmission de rayons X à travers la charge (15), l'image numérisée (20) comprenant un ensemble de pixels (32), une valeur représentative de la transmission des rayons X étant associée à chaque pixel (32), chaque pixel étant associé à une partie de la charge (15) ;
- un calculateur pour déterminer (104) des zones d'intérêt (40) de l'image numérisée (20) à partir des valeurs des pixels (32), les zones d'intérêt (40) étant des sous-ensembles de l'image numérisée (20) ;
- un calculateur pour attribuer (106) un label (L) à chaque pixel (32) de chaque zone d'intérêt (40), le label (L) attribué au pixel (32) étant représentatif de matériaux présents dans la partie de la charge (15) correspondant au pixel (32) ; et
- au moins un écran ou au moins un dispositif d'affichage pour afficher au moins une image montrant les labels (L) attribués aux pixels (32) ;
**caractérisé en ce que** :
- le calculateur pour attribuer (106) le label (L) à chaque pixel (32) de chaque zone d'intérêt (40) est configuré pour réaliser au moins un test statistique global (132, 134, 136) à partir de valeurs d'un groupe de pixels de la zone d'intérêt (40) à laquelle appartient le pixel (32) et au moins un test local (138, 139, 126) réalisé à partir de la valeur du pixel (32),
- pour réaliser le test statistique global (132, 134, 136), ledit calculateur est configuré pour comparer à au moins un seuil prédéterminé (S4, S5, S6, S9) une grandeur (M, S) choisie parmi la moyenne, l'écart-type, les moments d'ordre supérieurs, et/ou leurs combinaisons, calculés sur lesdites valeurs du groupe de pixels de la zone d'intérêt (40), et
- pour l'attribution (106) du label (L) à chaque pixel (32) de chaque zone d'intérêt (40), ledit calculateur est configuré pour calculer une taille (T) de la zone d'intérêt (40), définie comme le nombre de pixels (32) de la zone d'intérêt (40).

## Patentansprüche

1. Verfahren zur Inspektion (100) einer Last (15), umfassend die folgenden Schritte:
- Erhalten (102) mindestens eines digitalen Bildes (20) der Last (15), das mit Hilfe eines Erkennungssystems durch Übertragung von Röntgenstrahlen durch die Last (15) erzeugt wird, wobei das digitale Bild (20) eine Einheit von Pixeln (32) umfasst, wobei ein repräsentativer Wert der Übertragung der Röntgenstrahlen jedem Pixel (32) zugewiesen ist, wobei jedes Pixel einem Teil der Last (15) zugewiesen ist;
- Bestimmen (104) von Zonen von Interesse (40) des digitalen Bildes (20) ausgehend von den Werten der Pixel (32), wobei die Zonen von Interesse (40) Unter-Einheiten des digitalen Bildes (20) sind,
- Zuteilen (106) eines Etiketts (L) zu jedem Pixel (32) jeder Zone von Interesse (40), wobei das Etikett (L), das dem Pixel (32) zugeteilt ist, repräsentativ für die chemische Beschaffenheit und die Anordnung der Materialien ist, die den Teil der Last (15) bilden, der dem Pixel (32) entspricht; und
- Anzeigen eines Bildes, das die Etiketten (L) zeigt, die den Pixeln (32) zugeteilt sind;
**dadurch gekennzeichnet, dass**,
die Zuteilung (106) des Etiketts (L) zu jedem Pixel (32) jeder Zone von Interesse (40) mindestens einen globalen statistischen Test (132, 134, 136) umfasst, der ausgehend von Werten einer Gruppe von Pixeln der Zone von Interesse (40) durchgeführt wird, zu der das Pixel (32) gehört, und mindestens einen lokalen Test (138, 139, 126), der ausgehend vom Wert des Pixels (32) durchgeführt wird,
- um den globalen statistischen Test (132, 134, 136) durchzuführen, wird mit mindestens einem vorbestimmten Schwellenwert (S4, S5, S6, S9) eine Größe (M, S) verglichen, ausgewählt aus dem Mittel, der Standardabweichung, den Momenten höherer Ordnungen und/oder ihren Kombinationen, berechnet auf den Werten der Gruppe von Pixeln der Zone von Interesse (40), und
- für die Zuteilung (106) des Etiketts (L) zu jedem Pixel (32) jeder Zone von Interesse (40) wird eine Größe (T) der Zone von Interesse (40), definiert als die Anzahl von Pixeln (32) der Zone von Interesse (40), berechnet.

2. Verfahren zur Inspektion (100) nach Anspruch 1, **dadurch gekennzeichnet, dass** die Gruppe von Pixeln der Zone von Interesse (40) ausgehend von der der globale statistische Test (132, 134, 136) durchgeführt wird durch Wählen der Pixel (32) der Zone von Interesse (40), deren Wert einen vorbestimmten Schwellenwert (S2, S2) übersteigt, erhalten wird.

3. Verfahren zur Inspektion (100) nach einem der Ansprüche 1 oder 2, **dadurch gekennzeichnet, dass** für die Zuteilung des Etiketts (L) zu jedem Pixel (32) jeder Zone von Interesse (40) der Wert des Pixels (32) mit einem vorbestimmten Schwellenwert (S1, S2, S7, S8) verglichen wird.

4. Verfahren zur Inspektion (100) nach einem der Ansprüche 1 bis 3, **dadurch gekennzeichnet, dass** für die Zuteilung (106) des Etiketts (L) zu jedem Pixel (32) jeder Zone von Interesse (40) das Etikett (L) aus einer Einheit von möglichen Etiketten genommen wird, umfassend ein "unbestimmtes" Etikett, das anzeigt, dass die Materialien, die im Teil der Last (15) vorhanden sind, der dem Pixel (32) entspricht, unbestimmt sind.

5. Verfahren zur Inspektion (100) nach Anspruch 4 in Abhängigkeit von Anspruch 2 bis 5, **dadurch gekennzeichnet, dass** das Etikett "unbestimmt" dem Pixel (32) der Zone von Interesse (40) zugeteilt wird, wenn:
- die Größe (T) der Zone von Interesse (40) kleiner als oder gleich wie ein vorbestimmter Schwellenwert (S3) ist; oder
- nach einem oder mehreren globalen statistischen Tests (132, 134, 136) der Wert des Pixels (32) höher als oder gleich wie ein vorbestimmter Schwellenwert (S7, S8) ist.

6. Verfahren zur Inspektion (100) nach einem der Ansprüche 1 bis 5, **dadurch gekennzeichnet, dass** für die Zuteilung (106) des Etiketts (L) zu jedem Pixel (32) jeder Zone von Interesse (40) das Etikett (L) aus einer Einheit von möglichen Etiketten genommen wird, umfassend:
- ein Etikett "erste Kategorie", das eine statistische Information überträgt, gemäß der die Materialien, die im Teil der Last (15) vorhanden sind, der dem Pixel (32) entspricht, zu einer ersten Kategorie gehören; und
- ein Etikett "zweite Kategorie", das eine statistische Information überträgt, gemäß der die Materialien, die im Teil der Last (15) vorhanden sind, der dem Pixel (32) entspricht, zu einer zweiten Kategorie gehören;
wobei die zweite Kategorie Materialien mit effektiven Atomzahlen umfasst, die höher als diejenigen der ersten Kategorie sind.

7. Verfahren zur Inspektion (100) nach Anspruch 6, **dadurch gekennzeichnet, dass** die erste Kategorie Materialien entspricht, die im Wesentlichen organisch sind, und die zweite Kategorie Materialien entspricht, die im Wesentlichen anorganisch sind.

8. Verfahren zur Inspektion (100) nach Anspruch 6 oder 7 in Abhängigkeit von Anspruch 2 bis 5, **dadurch gekennzeichnet, dass** das Etikett "erste Kategorie" dem Pixel (32) der Zone von Interesse (40) zugeteilt wird, wenn:
- die Größe (T) der Zone von Interesse (40) strikt grösser als ein vorbestimmter Schwellenwert (S3) ist,
- ein oder mehrere globale statistische Tests (132, 134, 136) ausreichend für eine erste Art sind, und
- der Wert des Pixels (32) strikt geringer als ein vorbestimmter Schwellenwert (S8) ist.

9. Verfahren zur Inspektion nach Anspruch 8, **dadurch gekennzeichnet, dass** das Etikett "zweite Kategorie" dem Pixel der Zone von Interesse zugeteilt ist, wenn:
- die Größe (T) der Zone von Interesse (40) strikt grösser als ein vorbestimmter Schwellenwert (S3) ist,
- ein oder mehrere globale statistische Tests (132, 134) ausreichend für eine zweite Art sind, die verschieden von der ersten Art ist, und
- der Wert des Pixels (32) strikt geringer als ein vorbestimmter Schwellenwert (S7) ist.

10. Verfahren zur Inspektion (100) nach einem der Ansprüche 1 bis 9, **dadurch gekennzeichnet, dass** die Bestimmung der Zonen von Interesse (40) des digitalen Bildes (20) ausgehend von einer Berechnung der Intensität des Gradienten des digitalen Bildes (20) durchgeführt wird.

11. Verfahren zur Inspektion (100) nach Anspruch 10, **dadurch gekennzeichnet, dass** die Bestimmung der Zonen von Interesse (40) des digitalen Bildes (20) eine Segmentierung vom Typ "Wasserscheide" umfasst, die ausgehend von der Berechnung der Intensität des Gradienten des digitalen Bildes (20) durchgeführt wird.

12. Verfahren zur Inspektion (100) nach einem der Ansprüche 1 bis 11, **dadurch gekennzeichnet, dass** das digitale Bild (20) ausgehend von monoenergetischen Röntgenstrahlen erhalten wird, die vom Erkennungssystem von Röntgenstrahlen emittiert werden.

13. System zur Inspektion einer Last (15), umfassend:
- Mittel zum Erhalten eines digitalen Bildes (20) der Last (15), das mit Hilfe eines Erkennungssystems durch Übertragung von Röntgenstrahlen über die Last (15) erzeugt wird, wobei das digitale Bild (20) eine Einheit von Pixeln (32) umfasst, wobei ein repräsentativer Wert der Übertragung der Röntgenstrahlen jedem Pixel (32) zugewiesen ist, wobei jedes Pixel einem Teil der Last (15) zugewiesen ist;
- einen Rechner, um Zonen von Interesse (40) des digitalen Bildes (20) ausgehend von den Werten der Pixel (32) zu bestimmen (104), wobei die Zonen von Interesse (40) Unter-Einheiten des digitalen Bildes (20) sind;
- einen Rechner, um ein Etikett (L) jedem Pixel (32) jeder Zone von Interesse (40) zuzuteilen (106), wobei das Etikett (L), das dem Pixel (32) zugeteilt ist, repräsentativ für die Materialien ist, die im Teil der Last (15) vorhanden sind, der dem Pixel (32) entspricht; und
- mindestens einen Bildschirm oder mindestens eine Anzeigevorrichtung, um mindestens ein Bild anzuzeigen, das die Etiketten (L) zeigt, die den Pixeln (32) zugeteilt sind;
**dadurch gekennzeichnet, dass**,
- der Rechner, um das Etikett (L) jedem Pixel (32) jeder Zone von Interesse (40) zuzuteilen (106), konfiguriert ist, um mindestens einen globalen statistischen Test (132, 134, 136) ausgehend von Werten einer Gruppe von Pixeln der Zone von Interesse (40) durchzuführen, zu der das Pixel (32) gehört, und mindestens einen lokalen Test (138, 139, 126), der ausgehend vom Wert des Pixels (32) durchgeführt wird,
- um den globalen statistischen Test (132, 134, 136) durchzuführen, der Rechner konfiguriert ist, um mit mindestens einem vorbestimmten Schwellenwert (S4, S5, S6, S9) eine Größe (M, S) zu verglichen, ausgewählt aus dem Mittel, der Standardabweichung, den Momenten höherer Ordnungen und/oder ihren Kombinationen, berechnet auf den Werten der Gruppe von Pixeln der Zone von Interesse (40), und
- für die Zuteilung (106) des Etiketts (L) zu jedem Pixel (32) jeder Zone von Interesse (40) der Rechner konfiguriert ist, um eine Größe (T) der Zone von Interesse (40) zu berechnen, definiert als die Anzahl von Pixeln (32) der Zone von Interesse (40).

## Claims

1. A method of inspecting (100) a load (15) comprising the following steps:
- obtaining (102) at least one digitized image (20) of the load (15) generated using a system for detection by transmitting x-rays through the load (15), the digitized image (20) comprising a set of pixels (32), a value representative of the transmission of the x-rays being associated with each pixel (32), each pixel being associated with a portion of the load (15);
- determining (104) areas of interest (40) of the digitized image (20) from values of the pixels (32), the areas of interest (40) being subsets of the digitized image (20);
- assigning (106) a label (L) to each pixel (32) of each area of interest (40), the label (L) assigned to the pixel (32) being representative of the chemical nature and of the arrangement of the materials making up the portion of the load (15) corresponding to the pixel (32); and
- displaying an image showing the labels (L) assigned to the pixels (32);
**characterized in that**:
- the assignment (106) of the label (L) to each pixel (32) of each area of interest (40) comprises at least one overall statistical test (132, 134, 136) done from values of a group of pixels of the area of interest (40) to which the pixel (32) belongs and at least one local test (138, 139, 126) done from the value of the pixel (32),
- to perform the overall statistical test (132, 134, 136), a property (M, S) chosen from the mean, the standard deviation, the higher-order moments, and/or combinations thereof, calculated on said values of the group of pixels of the area of interest (40), is compared to at least one predetermined threshold (S4, S5, S6, S9),
- to assign (106) the label (L) to each pixel (32) of each area of interest (40), a size (T) of the area of interest (40) is calculated, defined as the number of pixels (32) of the area of interest (40).

2. The inspection method (100) according to claim 1, **characterized in that** the group of pixels of the area of interest (40) is obtained from which the overall statistical test (132, 134, 136) is done by choosing the pixels (32) of the area of interest (40) whose value exceeds a predetermined threshold (S1, S2).

3. The inspection method (100) according to any one of claims 1 or 2, **characterized in that**, to assign the label (L) to each pixel (32) of each area of interest (40), the value of the pixel (32) is compared to a predetermined threshold (S1, S2, S7, S8).

4. The inspection method (100) according to any one of claims 1 to 3, **characterized in that**, to assign (106) the label (L) to each pixel (32) of each area of interest (40), the label (L) is taken from a set of possible labels comprising an "indeterminate" label indicating that the materials present in the portion of the load (15) corresponding to the pixel (32) are undetermined.

5. The inspection method (100) according to claim 4, as it depends on claims 2 to 5, **characterized in that** the "indeterminate" label is assigned to the pixel (32) of the area of interest (40) if:
- the size (T) of the area of interest (40) is less than or equal to a predetermined threshold (S3); or
- after one or several overall statistical tests (132, 134, 136), the value of the pixel (32) is greater than or equal to a predetermined threshold (S7, S8).

6. The inspection method (100) according to any one of claims 1 to 5, **characterized in that**, to assign (106) the label (L) to each pixel (32) of each area of interest (40), the label (L) is taken from a set of possible labels comprising:
- a "first category" label transmitting statistical information according to which the labels present in the portion of the load (15) corresponding to the pixel (32) belong to a first category; and
- a "second category" label transmitting statistical information according to which the materials present in the portion of the load (15) corresponding to the pixel (32) belong to a second category different from the first category;
the second category comprising materials with effective atomic numbers higher than those of the first category.

7. The inspection method (100) according to claim 6, **characterized in that** the first category corresponds to substantially organic materials and the second category corresponds to substantially inorganic materials.

8. The inspection method (100) according to claim 6 or 7, as it depends on claims 2 to 5, **characterized in that** the "first category" label is assigned to the pixel (32) of the area of interest (40) if:
- the size (T) of the area of interest (40) is strictly greater than a predetermined threshold (S3),
- one or several overall statistical tests (132, 134, 136) are satisfied in a first manner, and
- the value of the pixel (32) is strictly below a predetermined threshold (S8).

9. The inspection method according to claim 8, **characterized in that** the "second category" label is assigned to the pixel of the area of interest if:
- the size (T) of the area of interest (40) is strictly above a predetermined threshold (S3),
- one or several overall statistical tests (132, 134) are satisfied in a second manner, different from the first manner, and
- the value of the pixel (32) is strictly below a predetermined threshold (S7).

10. The inspection method (100) according to any one of claims 1 to 9, **characterized in that** the areas of interest (40) of the digitized image (20) are determined from an intensity calculation of the gradient of the digitized image (20).

11. The inspection method (100) according to claim 10, **characterized in that** determining the areas of interest (40) of the digitized image (20) comprises a segmentation of the "watershed" type done from the gradient intensity calculation of the digitized image (20).

12. The inspection method (100) according to any one of claims 1 to 11, **characterized in that** the digitized image (20) is obtained from single-energy x-rays emitted by the x-ray detection system.

13. A system for inspecting a load (15) comprising:
- means for obtaining a digitized image (20) of the load (15) generated using a system for detection by transmitting x-rays through the load (15), the digitized image (20) comprising a set of pixels (32), a value representative of the transmission of the x-rays being associated with each pixel (32), each pixel being associated with a portion of the load (15);
- a computer to determine (104) areas of interest (40) of the digitized image (20) from values of the pixels (32), the areas of interest (40) being subsets of the digitized image (20);
- a computer to assign (106) a label (L) to each pixel (32) of each area of interest (40), the label (L) assigned to the pixel (32) being representative of materials present in the portion of the load (15) corresponding to the pixel (32); and
- at least one screen or at least one display device to display at least one image showing the labels (L) assigned to the pixels (32);
**characterized in that**:
- the computer to assign (106) the label (L) to each pixel (32) of each area of interest (40) is configured to perform at least one overall statistical test (132, 134, 136) from values of a group of pixels of the area of interest (40) to which the pixel (32) belongs and at least one local test (138, 139, 126) done from the value of the pixel (32),
- to perform the overall statistical test (132, 134, 136), said computer is configured to compare a property (M, S) chosen from the mean, the standard deviation, the higher-order moments, and/or combinations thereof, calculated on said values of the group of pixels of the area of interest (40), to at least one predetermined threshold (S4, S5, S6, S9), and
- to assign (106) the label (L) to each pixel (32) of each area of interest (40), said computer is configured to calculate a size (T) of the area of interest (40), defined as the number of pixels (32) of the area of interest (40).
